# EUROPEAN PATENT SPECIFICATION

(11) **EP 4 470 165 B1**
(45) Date of publication and mention of the grant of the patent: **22.10.2025**
(21) Application number: 23708544.4
(22) Date of filing: 27.01.2023
(51) Int. Cl.: G06Q 10/105, G06Q 50/26, H04W 12/03, H04W 12/08, H04L 9/40, G01S 5/00, H04L 67/52, H04M 1/72457, H04W 4/029, G06Q 30/0251, H04W 64/00

(54) **SYSTEM AND METHOD FOR SECURELY PROVIDING LOCATION INFORMATION OF ELECTRONIC DEVICE**
SYSTEM UND VERFAHREN ZUR SICHEREN BEREITSTELLUNG VON STANDORTINFORMATIONEN EINER ELEKTRONISCHEN VORRICHTUNG
SYSTÈME ET PROCÉDÉ DE FOURNITURE SÉCURISÉE D'INFORMATIONS DE LOCALISATION D'UN DISPOSITIF ÉLECTRONIQUE

(30) Priority: 27.01.2022 GB 202201040
(43) Date of publication of application: 04.12.2024
(73) Proprietor: Restrata Solutions Limited, Waterloo Quay Aberdeen AB11 5BS (GB)
(72) Inventor: OSMAN, Botan, Aberdeen AB11 5BS (GB); ATLAS, Jason, Aberdeen AB11 5BS (GB); GUNARATNE, Hiran, Aberdeen AB11 5BS (GB)
(74) Representative: Basck Limited
(86) International application number: PCT/IB2023/050720
(87) International publication number: WO 2023/144767

(56) References cited:
- EP-A1- 1 631 039
- US-A1- 2003 035 544
- US-A1- 2014 045 450

## Description

### TECHNICAL FIELD

The teachings herein relates generally to secure localization systems and methods and more specifically, to a system and a method for securely providing location information of an electronic device.

### BACKGROUND

The patent document US2003/035544 discloses an apparatus and method for secure distribution of mobile station location information. In addition, the patent document EP1631039 discloses a system and method for enforcing location privacy using rights management.

In recent times, increasing growth in technology has led to rapid development of various services, such as telecommunication services, networking services, internet services, localization services and the like. Such services are being increasingly utilized by millions of users worldwide, such as by customers and/or subscribers employing such services. Further, with the advent of electronic and/or mobile devices such as, laptops, personal cell phones, smart watches, and the like associated with a user, determining location information of the user has become relatively easier. By using communication networks such as, internet services, the location information of the user may be sent to an enterprise or another individual that is remote to the user.

The location information is extremely valuable and private. Hence, easy access of the location information by anyone apart from the user may lead to an invasion of privacy. Often, the accessed location information may be used for illegal and unauthorized purposes, that may eventually put the user at risk. However, organizations, such as, national governments, employers, health care departments, and the like may need to track certain individuals. For example, the employer may wish to track the location of the employee. In such cases, organizations may employ conventional techniques to track the individual. However, the biggest hurdle to this is maintaining privacy and a general lack of trust between the individual being tracked and the person/organization tracking the individual. Moreover, there are not many legitimate use cases for the person to be tracked throughout the day, month, year, or even lifetime. This may often result in the individual not being willing to tracked.

Therefore, in light of the foregoing discussion, there exists a need to overcome the aforementioned drawbacks associated with the conventional techniques of tracking individuals.

### SUMMARY

The teachings herein seek to provide a system and a method for securely providing location information of an electronic device. The teachings herein seeks to provide a solution to the existing problem of a general lack of trust between an individual being tracked and a person tracking the individual. An aim of the teachings herein is to provide a solution that overcomes at least partially the problems encountered in prior art and provides an improved system and method for securely providing location information of the electronic device.

The object of the teachings herein is achieved by the solutions provided in the enclosed independent claims. Advantageous implementations of the teachings herein are further defined in the dependent claims.

In one aspect, the teachings herein provides a system for securely providing location information of an electronic device, the system comprising a server arrangement communicatively coupled to the electronic device, wherein the server arrangement is configured to:
obtain location information and associated permissions pertaining to an electronic device, the location information being encrypted by the electronic device;
determine access rights for the electronic device based on the permissions provided by the electronic device, wherein the access rights comprise one or more conditions for sharing location information;
receive a request from an entity to access the location information of the electronic device;
determine whether the entity is authorized to access the location information of the electronic device based on the determined access rights associated with the electronic device;
decrypt the location information of the electronic device if the entity is authorized to access the location information based on the determined access rights; and
provide the decrypted location information to the entity.

In another aspect, the teachings herein provides a method for securely providing location information of an electronic device, wherein the method comprises:
obtaining location information and associated permissions pertaining to the electronic device, the location information being encrypted by the electronic device;
determining access rights for the electronic device based on the permissions provided by the electronic device, wherein the access rights comprise one or more conditions for sharing location information;
receiving a request from an entity to access the location information of the electronic device;
determining whether the entity is authorized to access the location information of the electronic device based on the determined access rights associated with the electronic device;
decrypting the location information of the electronic device if the entity is authorized to access the location information; and
providing the decrypted location information to the entity.

It has to be noted that all devices, elements, circuitry, units and means described in the teachings herein could be implemented in the software or hardware elements or any kind of combination thereof. All steps which are performed by the various entities described in the teachings herein as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the teachings herein are susceptible to being combined in various combinations without departing from the scope of the teachings herein as defined by the appended claims.

Additional aspects, advantages, features and objects of the teachings herein would be made apparent from the drawings and the detailed description of the illustrative implementations construed in conjunction with the appended claims that follow.

### BRIEF DESCRIPTION OF THE DRAWINGS

The summary above, as well as the following detailed description of illustrative embodiments, is better understood when read in conjunction with the appended drawings. For the purpose of illustrating the teachings herein, exemplary constructions of the disclosure are shown in the drawings. However, the teachings herein is not limited to specific methods and instrumentalities disclosed herein. Moreover, those in the art will understand that the drawings are not to scale. Wherever possible, like elements have been indicated by identical numbers.

Embodiments of the teachings herein will now be described, by way of example only, with reference to the following diagrams wherein:
FIG. 1 is a block diagram of a system for securely providing location information of an electronic device, in accordance with an embodiment of the teachings herein;
FIG. 2 is a schematic diagram of a process flow for securely providing location information of the electronic device, in accordance with an embodiment of the teachings herein; and
FIG. 3 is a flowchart of method for securely providing location information of the electronic device, in accordance with an embodiment of the teachings herein.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the teachings herein and ways in which they can be implemented. Although some modes of carrying out the teachings herein have been disclosed, those skilled in the art would recognize that other embodiments for carrying out or practicing the teachings herein are also possible.

In one aspect, the teachings herein provides a system for securely providing location information of an electronic device, the system comprising a server arrangement communicatively coupled to the electronic device, wherein the server arrangement is configured to:
obtain location information and associated permissions pertaining to an electronic device, the location information being encrypted by the electronic device;
determine access rights for the electronic device based on the permissions provided by the electronic device, wherein the access rights comprise one or more conditions for sharing location information;
receive a request from an entity to access the location information of the electronic device;
determine whether the entity is authorized to access the location information of the electronic device based on the determined access rights associated with the electronic device;
decrypt the location information of the electronic device if the entity is authorized to access the location information based on the determined access rights; and
provide the decrypted location information to the entity.

In another aspect, the teachings herein provides method for securely providing location information of an electronic device, wherein the method comprises:
obtaining location information and associated permissions pertaining to the electronic device, the location information being encrypted by the electronic device;
determining access rights for the electronic device based on the permissions provided by the electronic device, wherein the access rights comprise one or more conditions for sharing location information;
receiving a request from an entity to access the location information of the electronic device;
determining whether the entity is authorized to access the location information of the electronic device based on the determined access rights associated with the electronic device;
decrypting the location information of the electronic device if the entity is authorized to access the location information; and
providing the decrypted location information to the entity.

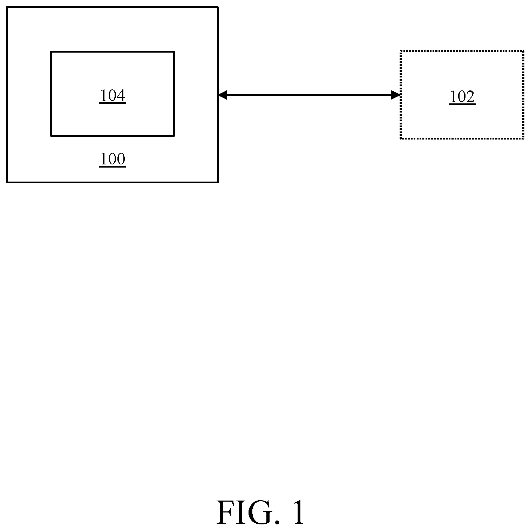

FIG. 1 is a block diagram of a system **100** for securely providing location information of an electronic device **102,** in accordance with an embodiment of the teachings herein. As shown, the system **100** comprises a server arrangement **104,** wherein the server arrangement is communicatively coupled to the electronic device **102.**

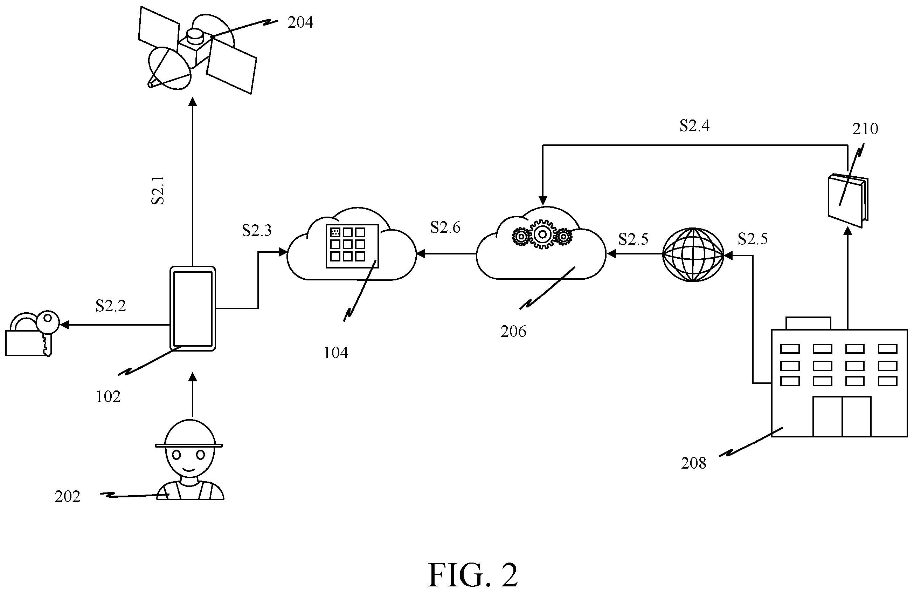

FIG. 2 is a schematic diagram of a process flow for securely providing location information of the electronic device **102,** in accordance with an embodiment of the teachings herein. The process flow includes steps **S2.1** to **S2.6,** which have been described in detail in the proceeding paragraphs.

Referring to FIGs. 1 and 2 in combination, the server arrangement **104** may be a company cloud, a cloud, an open internet, a private routing to closed data centre, and the like that may house an individual user private data store of businesses. The term *"server arrangement"* refers to a structure and/or module that include programmable and/or non-programmable components configured to store, process and/or share information to enable the system **100** to securely provide location information of the electronic device **102.** Optionally, the server arrangement **104** includes any arrangement of physical or virtual computational entities capable of enhancing information to perform various computational tasks. Furthermore, it will be appreciated that the server arrangement **104** may be implemented as a hardware server and/or plurality of hardware servers operating in a parallel or in a distributed architecture. In an example, the server arrangement **104** may include components such as a memory, a processor, a data communication interface, a network adapter, and the like, to store, process and/or share information with other computing devices, such as the electronic device **102.**

The electronic device **102** may be a device carried by a user whose location may need to be accessed. In some embodiments, the electronic device is one of: a user device, an industrial asset, an IoT device, and an autonomous vehicle. Herein, the industrial asset may a resource that is related to an industry whose location needs to be accessed. The IoT device or the internet of things device may include sensors, actuators, and the like that may interact with each other via internet. The autonomous vehicle also known as, a robot-car, a self-driving car may sense an environment and may navigate through the environment with minimum human input. The electronic device **102** of the teachings herein may be, such as cellular phones, smartphones, personal digital assistants (PDAs), handheld devices, laptop computers, personal computers, tablet computers, desktop computers, virtual reality (VR) or extended reality (XR) headsets, VR or XR glasses, smart televisions, a server, and the like, that are operable to transmit location information and may be carried by the user whose location may need to be accessed. Herein, the user may be any individual that a contract holder such as, an employer, business or organization wishes to track.

Referring to FIG. 2, the electronic device **102** is the personal cell phone carried by a user **202.** Referring back to FIGs. 1 and 2 in combination, the server arrangement **104** may be communicatively coupled to the electronic device **102.**

The server arrangement **104** is configured to obtain location information and associated permissions pertaining to the electronic device **102,** the location information being encrypted by the electronic device **102.** At step S2.1, the electronic device **102** may determine its own location by decoding signals received from a satellite **204.** The satellite **204** is representation of a remote location service (RTLS) delivery mechanism. The electronic device **102** may directly subscribe to the satellite **204,** a third-party data feed, or any other type of edge or device delivery. The technique of determining the location may not matter. The satellite **204** may be simply a means of bringing real time tracking and location data from outside the personal cell phone **102** into the personal cell phone **102** via internet services. In some embodiments, a part of a software package from the business may be installed on the electronic device **102.** The software package may be a means to track the user **202** via the electronic device **102.** The software package may include an encryption library and an application programming interface (API) that calls out to the satellite **204** for determining the location of the electronic device **102.** The satellite **204** sends location details over the API back to the electronic device **102.** At step S2.2, the electronic device **102,** on ingestion, encrypts location information using an encryption service and then may send the encrypted location information to the server arrangement **104.** The encryption service on the electronic device **102** may encapsulate the location information into a crypto string. The location information may be encrypted using secure key/store key encryption which may represent a mechanism used to encrypt the location information received from the satellite **204.** Some examples of secure key/store key encryption may be a public/private key encryption, wallet/ledger (blockchain) encryption, and the like.

Optionally, the electronic device **102** is configured to encrypt and the server arrangement **104** is configured to decrypt the location information using a public key and private key pair. It will be appreciated that the public key may be shared with everyone in the system **100.** Each public key has the private key. By using the public key, a message may be encrypted and correspondingly by using the private key the encrypted message may be decrypted. Herein, the electronic device **102** may know the public key of an entity **208** that wishes to access the location information. The electronic device **102** may encrypt its own location information using the public key. The server arrangement **104** may decrypt the encrypted location information using the private key. Apart from the location information, the server arrangement **104** may also obtain the associated permissions pertaining to the electronic device **102.** Thus, the server arrangement **104** may have an ability to unlock the location information owned by the user **202** only when the user **202** permits to do so. A company attempting to track and locate the user **202** cannot do so unless they are expressly given permissions.

It may be noted that the permissions including conditions, a time to live (TTL) for a communication session and an ability to rescind access to the location information is entirely owned by the user **202.** It will be appreciated that the system **100** does not interfere with regulatory aspects of data ownership i.e., associated with the location information and are dependent upon the arrangements of the implementation. Thus, the user **202,** via the process outlined above, may have the encryption service on their personal cell phone **102** as part of a tracking application being installed. This encryption service must be independently audited for conforming that all current legal guidelines for encryption and access standards are followed. The encryption service may, via a mechanism chosen by an implementor, for example, using SHA1024 private key or leveraging a blockchain wallet, encrypt the location information. This will mean only the entity **208** in question may now unlock and access the location information.

In some embodiments, the server arrangement **104** may include the individual user private data store that may be a dedicated data store on a per user basis. Herein, each individual store may be encrypted with secure key/store key encryption that is issued and owned by an individual employee, such as the user **202.** An encryption level of each individual user private data store may be set to any level that the software platform chooses to implement. The encryption service may not be relevant for setting the encryption level of the individual user private data store. Referring to FIG. 2, at step **S2.3,** the location information is stored in the individual user private data store of the server arrangement **104.**

It may be further noted that, in some embodiments, an employee's share key host may be at least one of a cloud, data centre, enterprise, and the like. In fact, it is worth noting that all environments may be on a same physical machine, co-located, or distributed around the world. As all services are connected via API, location is irrelevant. An employee's share key host may provide a session key. The employee's share key host may use public key infrastructure (PKI) shared delegation services issued from private key ownership; blockchain delegator wallet, or trust wallet implementation. Herein, the actual encryption methodology may not be relevant, and wherein the aspect of data ownership and process flow are integral to the teachings herein.

Referring to FIG. 1 and FIG. 2 in combination, the server arrangement **104** is further configured to determine access rights for the electronic device **102** based on the permissions provided by the electronic device **102.** Herein the access rights comprise one or more conditions for sharing location information. The one or more conditions may be one or more rules that may help in deciding whether the entity **208** is permitted to access the location information of the electronic device **102** or not.

Optionally, the electronic device **102** is associated with an employee and the entity **208** is an employer. Referring to FIG. 2, the electronic device **102** is carried by the employee, such as, the user **202** and the entity **208** is the employer.

Optionally, the server arrangement **104** is configured to determine the access rights based on a contractual agreement between the employer and the employee. Referring to FIG. 2, at step **S2. 4,** a broker **206** which is a privacy location safe service is provided with a contractual agreement **210** between the user **202** and the entity **208.** Herein, the broker **206** may be a public cloud or simply a representation of where software platform of the business may run. It will be appreciated that the contractual agreement **210** may be a contract consisting of terms and conditions of what to do and/or what not to do that is signed between two parties such as, the employer and the employee. In some cases, the contractual agreement **210** may allow the employer to access the location information of the employee. In other words, the contractual agreement **210** between employer and the employee may include how, when and under what circumstances the employer is able to view and track the employee's location information. That is, the contractual agreement **210** may state reasons as to why the location information may be provided. Thus, the server arrangement **104** may refer the contractual agreement **210** to determine the access rights. The set of access right may either allow or refrain the employer from accessing the location information of the employee. For example, the set of access right may allow the server arrangement **108** to send a list of people present within a given latitudes, and longitudes. It will be appreciated that the contractual agreement **210** is not limited to employee-employer relationships and may include an agreement existing between any two or more of users, subscribers, businesses or organizations.

Optionally, the server arrangement **104** is configured to determine the access rights based on time of services provided by the employee **202,** location of services of the employee **202,** and duration of services provided by the employee **202** as agreed in the contractual agreement **210.** The employee **202** may not want the location information to be accessible by the employer **208** through the day. Hence, certain situations and conditions may be signed in the contractual agreement **210** according to which the location information of the employee **202** may be accessed by the employer **208.** The time of services provided by the employee **202** may be a time duration in which the employee **202** works. The time of services may be timing such as, weekday, weekend, and time of day. The location of services of the employee **202** may be the location at which the employee **202** may work. For example, the location of services may determine whether the employee **202** is working inside office or outside office. The duration of services may be time span in which the employee **202** may provide services to the employer **208.** The access right may be based on the time of services provided by the employee **202,** the location of services of the employee **202,** and the duration of services provided by the employee **202.** For example, if the employee **202** has working hours from 9 am to 5 pm, the access right may allow location information to be accessed by the employer **208** only during working hours. Similarly, the access right may allow the employer **208** to access location information of the employee **202,** if the employee **202** moves from a location A to a location B, or to a place where some event is taking place to which they have subscribed to. In another example, if all employees **202** that have said in contract agreement that they were business travellers, and their location is detected in a place outside of the scope of their travel boundaries, the access rights may grant permission to the employer **208** to access the location information of the employee **202.** It may be noted that system **100** does not have to be an employee/employer relationship and may work just we well if this is done via a consumer application, and terms and conditions of the consumer application articulate privacy and location conditions.

Optionally, the server arrangement **104** is configured to determine the access rights based on a state of an application installed in the electronic device **102,** wherein the state of the application is one of: an active state and an inactive state. Herein, the application may be a part of the software platform installed on the electronic device **102.** The software platform may be a core business software platform that may deliver tracking and location capabilities and may be operated in a data centre. It will be appreciated that the location information may be an agnostic location and thus beneficially provides flexibility to the system **100** and the user thereof. The application may be in the active state or the inactive state. The application may be in the active state if it is being used by the user **202** and in the inactive state if it is not being used by the user **202.** The server arrangement **104** may determine the access rights based on the state of an application. If the application is in the active state, the location information of the electronic device **102** may be accessed and if the application is in the inactive state, the location information of the electronic device **102** may not be accessed. However, in cases of emergencies, the access to the location information may be granted even when the application is in the inactive state. The server arrangement **104** may also determine the access rights based on a state of the electronic device **102** that gives an idea of the state of the user **202** such as, whether the user **202** is working, not working, logged in or not logged in.

Optionally, the server arrangement **104** is configured to determine the access rights based on emergency conditions in a geographical area of the electronic device **102,** and wherein the emergency condition is one or more of: a natural calamity, an accident, an unauthorized access of the electronic device **102,** and presence of the electronic device **102** in a restricted geographical area. Herein, the natural calamity may be an earthquake, a hurricane, a volcanic eruption, and the like. It may be noted that the emergency condition may be external events of urgency connected to a location and the server arrangement **104** may allow tracking if the user **202** is in that location. In cases of emergency condition, the access to the location information may be granted even when the application is in inactive state. For example, if the hurricane is coming and the entity **208** needs to evacuate its employee, such as the user **202,** then the entity **208** may track and provide emergency services to the user **202** even when the application is in the inactive state as the user **202** may not have the time to "opt in" in order to change the state of the application to the active state. Similarly, if the user **202** carrying the electronic device **102** meets accident, the entity **208** may be provided access to the location information. Also, if an unauthorized person access the electronic device **102,** the location information of the electronic device **102** may be provided to the entity **208.** Furthermore, if the user **202** carrying the electronic device **102** enters the restricted geographical area, the entity **208** may be provided access to the location information. The server arrangement **104** may also allow tracking of the location information according to alert levels, for example, if high alert is present in the location, the tracking may be allowed.

Optionally, the server arrangement **104** is configured to determine the access rights based on a health condition of an individual associated with the electronic device **102.** The health condition may define a health of the individual. The health condition may be divided into categories such as, normal, severe, and the like. The health condition may be obtained by determining a number of parameters, such a heart rate, a blood pressure, an eye health, and the like of the individual. In other words, the health condition may be physical conditions such as, heart rate, or other health vitals, that could also be applied to determine the set of access right. If the individual is ill, the tracking of the individual may be allowed.

Optionally, the server arrangement **104** is configured to provide the health condition of the individual to the entity **208.** Herein, the entity **208** is at least one of: a health organization, a designated health specialist, and emergency contacts of the individual. According to the health of the individual, the access rights may grant access to the location information of the electronic device **102** to the entity **208.** For example, if heart rate is more than hundred beats per minute, the access rights may grant access to the location information of the electronic device **102.** The health condition of the individual may be also provided so that the entity **208,** may take actions, such as, sending a medical aid to the individual according to the health condition. Thus, apart from data related to only the location of the individual, the location information and the health condition such as, health data of vitals may be also provided.

The server arrangement **104** is configured to receive a request from the entity **208** to access the location information of the electronic device **102.** Herein, the entity **208** may be a body and/or a person that needs to access the location information of the electronic device **102.** Optionally, the entity **208** is one of: an organization, a law enforcement agency, a health department, a government regulatory body, and an individual. The system **100** may be also used for consumers apart from individual use cases.

Optionally, the server arrangement **104,** the electronic device **102,** and the entity **208** are communicating over a blockchain network. The blockchain network may ensure that the location information of the electronic device **102** may not altered or hacked. Each block in the block chain network may be time stamped, and cryptographically signed. Thus, even when a single block is hacked and altered by a hacker, the entity **208** and/or the server arrangement **104,** may easily come to about the hacking. In order to corrupt the blockchain, the hacker may need to alter each block of the blockchain. For example, if few blocks of the request to access the location information of the electronic device **102** from the entity **208** is hacked, the server arrangement **104** may come to know about it and may deny the request straightaway.

The server arrangement **104** may provide disambiguation service itself by implementing the rules as it were. The server arrangement **104** may ingest a first data of the determined access rights from the business over a blind request. Herein, the first data may be: every individual user that is interested in being, every user permission vehicle to access data which may be in case of using something like the public/private key or shared key implementation and not necessarily the same for blockchain, and contract-based reasons as to why access may be granted. The blind request may be the request for accessing location information and tracking coordinates of the electronic device **102** made by the entity **208** through the software platform. The request may be a configurable poll (or auto) that may continuously make a request for all tracking and location information. The request may contain names of all employees, a mechanism for accessing the individual user private data store (for example, if a public key intrastate (PKI) mechanism is used, then it would be using the public or shared key) and conditions of request. Based on combination of the employee, public key, and condition such as, why the entity **208** wants location information a response may be generated with a yes/no outcome that may pertain to access granted or access denied respectively.

The server arrangement **104** is configured to determine whether the entity **208** is authorized to access the location information of the electronic device **102** based on the determined access rights associated with the electronic device **102.** Herein, a decision of whether or not to grant access to the location is taken. That is, the server arrangement **104** may map request of accessing location information from each entity **208** against the determined access rights to allow access only if the conditions match. That is, according to the determined access rights associated with the electronic device **102,** the location information may or may not be unlocked and accessible. For example, if the determined access rights allow access of location information from 9 am to 5 pm, and current time is 12 pm, the server arrangement **104** may determine that the entity **208** may be authorized to access the location information of the electronic device **102.** Referring, the FIG. 2, at step S2.5, the entity **208** requests the broker **206** to access the location information of the electronic device **102.** The broker **206** determine whether the entity **208** is authorized to access the location information of the electronic device **102** based on the determined access rights associated with the electronic device **102.** At step S2.6 the broker **206** requests the server arrangement **104** to send the location information if the entity **208** is authorized to access the location information of the electronic device **102.**

The server arrangement **104** is configured to decrypt the location information of the electronic device **102** if the entity **208** is authorized to access the location information based on the determined access rights. As discussed, the location information of the electronic device **102** is encrypted. In order to read the location information, the encrypted location information may be first decrypted using the secret key.

The server arrangement **104** is configured to provide the decrypted location information to the entity **208.** The decrypted location information may be easily read by the entity **208.**

Thus, the server arrangement **104** may provide the location information of the electronic device **102** to the entity **208** according to the determined access rights.

Optionally, the server arrangement **104** is configured to deny access to the location information of the electronic device **102** if the entity **208** is not authorized to access the location information based on the determined access rights. In the above example, if the determined access rights allow access of location information from 9 am to 5 pm, and current time is 7 pm, the server arrangement **104** may deny access to the location information.

The teachings herein also provides a method for securely providing location information of an electronic device. The various embodiments and variants disclosed above apply *mutatis mutandis* to the present method without any limitations.

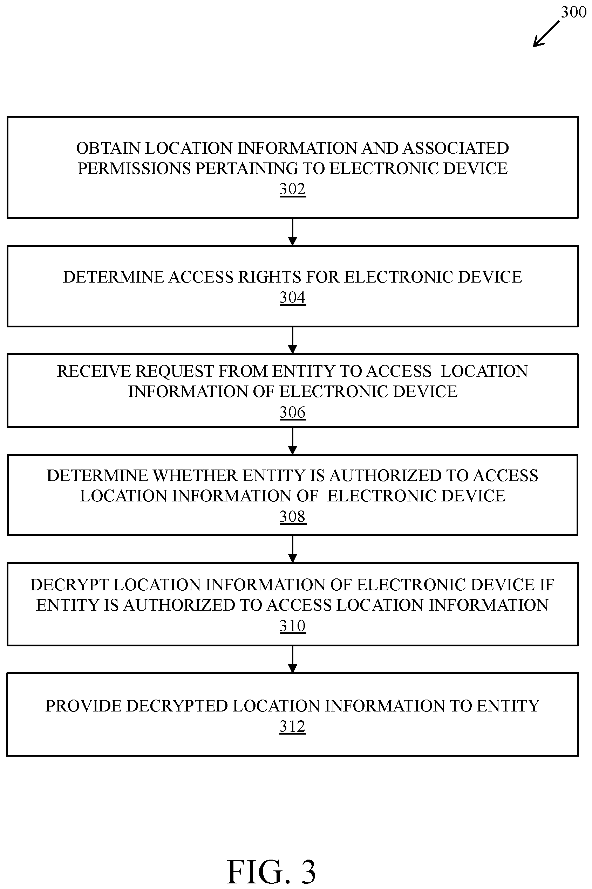

FIG. 3 is a flowchart of method **300** for securely providing location information of an electronic device, in accordance with an embodiment of the teachings herein. The method **300** includes steps **302** to **312,** which have been described in detail in the proceeding paragraphs.

The method **300** includes at step **302,** obtaining location information and associated permissions pertaining to the electronic device. Herein, the location information is encrypted by the electronic device. The method **300** includes at step **304,** determining access rights for the electronic device based on the permissions provided by the electronic device. Herein, the access rights comprise one or more conditions for sharing location information. The method **300** includes at step **306,** receiving a request from an entity to access the location information of the electronic device. The method **300** includes at step **308,** determining whether the entity is authorized to access the location information of the electronic device based on the determined access rights associated with the electronic device. The method **300** includes at step **310,** decrypting the location information of the electronic device if the entity is authorized to access the location information. The method **300** includes at step **312,** providing the decrypted location information to the entity.

The teachings herein also provides a computer-program product having machine-readable instructions stored therein, which when executed by the server arrangement **104,** cause the server arrangement **104** to perform the method **300.**

In some embodiments, the system **100** may execute an application for securely providing location information of the electronic device **102,** as described earlier in the teachings herein. In some implementations, the system **100** and/or application may be accessed via one or more of client applications. In some implementations, the system **100** may be a standalone application, or may be an applet/ application/ script /extension that may interact with and/or be executed within application or a component of the application and/or one or more of client applications. In some implementations, application may be a standalone application, or may be an applet /application /script /extension that may interact with and/or be executed within the system **100,** a component of the system **100,** and/or one or more of client applications. In some implementations, one or more of client applications may be a standalone application, or may be an applet / application / script / extension that may interact with and/or be executed within and/or be a component of the system **100** and/or application. Examples of client applications may include, but are not limited to, a standard and/or mobile web browser, an email application (e.g., an email client application), a textual and/or a graphical user interface, a customized web browser, a plugin, an Application Programming Interface (API), or a custom application. The instruction sets and subroutines of client applications which may be stored on storage devices coupled to electronic devices **102** may be executed by one or more processors and one or more memory architectures incorporated into the electronic devices **102.**

In some embodiments, one or more of client applications may be configured to effectuate some or all of the functionality of the system **100** (and vice versa). Accordingly, in some implementations, the system **100** may be a purely server-side application, a purely client-side application, or a hybrid server-side/ client-side application that is cooperatively executed by one or more of client applications and/or the system **100.**

In some embodiments, one or more of client applications may be configured to effectuate some or all of the functionality of application (and vice versa). Accordingly, in some implementations, application may be a purely server-side application, a purely client-side application, or a hybrid server-side / client-side application that is cooperatively executed by one or more of client applications and/or application. As one or more of client applications the system **100,** and application taken singly or in any combination, may effectuate some or all of the same functionality, any description of effectuating such functionality via one or more of client applications the system, application or combination thereof, and any described interaction(s) between one or more of client applications, the system **100,** application or combination thereof to effectuate such functionality, should be taken as an example only and not to limit the scope of the teachings herein.

The system **100** and the method **300** of the teachings herein in a nutshell provides a unique proposition that centres around an area of data ownership and flexible access parameters. The unique proposition fundamentally inverts the idea of data ownership concepts in a way that allows corporations and organisations that are providing the tracking service to meet all legitimate business interests they are trying to achieve, in a contract enforceable manner, while still giving the individual employee/consumer ownership and control. The entity of the teachings herein may create a programmatically implementable contractual agreement which may be an approved mechanism whereby via a document, web form or any other binding arrangement (depending on implementation) details of the rules depending on which the business can access the individual's location data for the purpose of tracking may be provided. The rules may range in nature and may be from very simple, structured rules, such as business can access the location information while using app, to stricter ones such as, the business can access location information during the working hours of 9 am to 5 pm. The rules may be also more combinatorial conditions. The system **100** and the method **300** may leave a number of aspects configurable or open to arbitration such as, how often the company keeps the location information available and accessible, if the user is to be alerted when they are being tracked or about the mechanisms to audit the location information.

The system **100** of the teachings herein may thus, provide privacy safe location service which may be meant to handle broker dynamic rules. For example, if the entity **208** has drawn geofences for a project and location information of anyone that moves into that geofence needs to be messaged. But, until they are in the drawn geofence, the entity **208** may not need the location information. The privacy safe location service may be continuously polling the private data store. The privacy safe location service may include simple deterministic rules engine or a more dynamic machine learning non-deterministic engine or anything in between. For a consumer application, the privacy safe location service may be moving into hot regions for a game, completing a series of game tasks that unlock a location specific reward, treasure hunt, taxi service, or anything the imagination and engineers can think of and build. In an exemplary scenario, such as in case of a natural calamity like a hurricane, the system **100** is configured to alert users in a wide area i.e., all the user within a geofence of a 10 mile or a 100 mile radius are notified or alerted about the natural calamity.

Modifications to embodiments of the teachings herein described in the foregoing are possible without departing from the scope of the teachings herein as defined by the accompanying claims. Expressions such as "including", "comprising", "incorporating", "have", "is" used to describe and claim the teachings herein are intended to be construed in a non-exclusive manner, namely allowing for items, components or elements not explicitly described also to be present. Reference to the singular is also to be construed to relate to the plural. The word "exemplary" is used herein to mean "serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the teachings herein, which are, for clarity, described in the context of separate embodiments, may also be provided in combination in a single embodiment. Conversely, various features of the teachings herein, which are, for brevity, described in the context of a single embodiment, may also be provided separately or in any suitable combination or as suitable in any other described embodiment of the disclosure.

## Claims

1. A system (100) for securely providing location information of an electronic device (102), the system comprising a server arrangement communicatively coupled to the electronic device, wherein the server arrangement (104) is configured to:
obtain location information and associated permissions pertaining to an electronic device, the location information being encrypted by the electronic device;
determine access rights for the electronic device based on the permissions provided by the electronic device, wherein the access rights comprise one or more conditions for sharing location information, wherein the server arrangement (104) is further configured to determine the access rights based on health condition of an individual associated with the electronic device (102);
receive a request from an entity (208) to access the location information of the electronic device;
determine whether the entity is authorized to access the location information of the electronic device based on the determined access rights associated with the electronic device;
decrypt the location information of the electronic device if the entity is authorized to access the location information based on the determined access rights, wherein the location information is decrypted using a public key and private key pair; and
provide the decrypted location information to the entity.

2. The system (100) according to claim 1, wherein the server arrangement (104) is configured to deny access to the location information of the electronic device (102) if the entity (208) is not authorized to access the location information based on the determined access rights.

3. The system (100) according to claim 1 or 2, wherein the electronic device (102) is configured to encrypt the location information using a public key and private key pair.

4. The system (100) according to any of the preceding claims, wherein the server arrangement (104), the electronic device (102), and the entity (208) are communicating over a blockchain network.

5. The system (100) according to any of the preceding claims, wherein the electronic device (102) is one of: a user device, an industrial asset, an IoT device, and an autonomous vehicle.

6. The system (100) according to any of the preceding claims, wherein the entity (208) is one of: an organization, a law enforcement agency, a health department, a government regulatory body, and an individual.

7. The system (100) according to any of the preceding claims, wherein the electronic device (102) is associated with an employee (202) and the entity (208) is an employer.

8. The system (100) according to claim 7, wherein the server arrangement (104) is configured to determine the access rights based on a contractual agreement (210) between the employer (208) and the employee (202).

9. The system (100) according to claim 8, wherein the server arrangement (104) is configured to determine the access rights based on time of services provided by the employee (202), location of services of the employee, and duration of services provided by the employee as agreed in the contractual agreement (210).

10. The system (100) according to claim 8 and 9, wherein the server arrangement (104) is configured to determine the access rights based on a state of an application installed in the electronic device (102), wherein the state of the application is one of: an active state and an inactive state.

11. The system (100) according to any of the preceding claims, wherein the server arrangement (104) is configured to determine the access rights based on emergency conditions in a geographical area of the electronic device (102), and wherein the emergency condition is one or more of: a natural calamity, an accident, an unauthorized access of the electronic device, and presence of the electronic device in a restricted geographical area.

12. The system (100) according to claim 1, wherein the server arrangement (104) is configured to provide the health condition of the individual to the entity, wherein the entity (208) is at least one of: a health organization, a designated health specialist, and emergency contacts of the individual.

13. A method (300) for securely providing location information of an electronic device (102), wherein the method comprises:
obtaining location information and associated permissions pertaining to the electronic device, the location information being encrypted by the electronic device;
determining access rights for the electronic device based on the permissions provided by the electronic device, wherein the access rights comprise one or more conditions for sharing location information, wherein the access rights are further determined on the basis of health condition of an individual associated with the electronic device (102);
receiving a request from an entity (208) to access the location information of the electronic device;
determining whether the entity is authorized to access the location information of the electronic device based on the determined access rights associated with the electronic device;
decrypting the location information of the electronic device if the entity is authorized to access the location information, wherein the location information is decrypted using a public key and private key pair; and
providing the decrypted location information to the entity.

14. A computer-program product having machine-readable instructions stored therein, which when executed by the server arrangement (104), cause the server arrangement to perform a method according to any of the claims 1 to 12.

## Patentansprüche

1. System (100) für ein sicheres Bereitstellen von Standortinformationen einer elektronischen Vorrichtung (102), das System aufweisend eine Serveranordnung, die kommunikativ mit der elektronischen Vorrichtung gekoppelt ist, wobei die Serveranordnung (104) eingerichtet ist für ein:
Erhalten von Standortinformationen und zugehörigen Berechtigungen, die sich auf eine elektronische Vorrichtung beziehen, wobei die Standortinformationen durch die elektronische Vorrichtung verschlüsselt werden;
Bestimmen von Zugriffsrechten für die elektronische Vorrichtung basierend auf den von der elektronischen Vorrichtung bereitgestellten Berechtigungen, wobei die Zugriffsrechte eine oder mehrere Bedingungen für ein Teilen von Standortinformationen umfassen, wobei die Serveranordnung (104) ferner dazu eingerichtet ist, die Zugriffsrechte basierend auf dem Gesundheitszustand einer mit der elektronischen Vorrichtung (102) verbundenen Person zu bestimmen;
Empfangen einer Anfrage von einer Entität (208) für ein Zugreifen auf die Standortinformationen der elektronischen Vorrichtung;
Bestimmen, ob die Entität basierend auf den bestimmten Zugriffsrechten, die der elektronischen Vorrichtung zugeordnet sind, für ein Zugreifen auf die Standortinformationen der elektronischen Vorrichtung berechtigt ist;
Entschlüsseln der Standortinformationen der elektronischen Vorrichtung, wenn die Entität basierend auf den bestimmten Zugriffsrechten für ein Zugreifen auf die Standortinformationen berechtigt ist, wobei die Standortinformationen unter Verwendung eines Paares aus öffentlichem Schlüssel und privatem Schlüssel entschlüsselt werden; und
Bereitstellen der entschlüsselten Standortinformationen an die Entität.

2. System (100) nach Anspruch 1, wobei die Serveranordnung (104) dazu eingerichtet ist, den Zugriff auf die Standortinformationen der elektronischen Vorrichtung (102) zu verweigern, wenn die Entität (208) basierend auf den bestimmten Zugriffsrechten nicht für ein Zugreifen auf die Standortinformationen berechtigt ist.

3. System (100) nach Anspruch 1 oder 2, wobei die elektronische Vorrichtung (102) dazu eingerichtet ist, die Standortinformationen unter Verwendung eines Paares aus öffentlichem Schlüssel und privatem Schlüssel zu verschlüsseln.

4. System (100) nach einem beliebigen der vorhergehenden Ansprüche, wobei die Serveranordnung (104), die elektronische Vorrichtung (102) und die Entität (208) über ein Blockchain-Netzwerk kommunizieren.

5. System (100) nach einem beliebigen der vorhergehenden Ansprüche, wobei die elektronische Vorrichtung (102) eines ist von: einer Benutzervorrichtung, einer industriellen Anlage, einer IoT-Vorrichtung und einem autonomen Fahrzeug.

6. System (100) nach einem beliebigen der vorhergehenden Ansprüche, wobei die Einheit (208) eines ist von: einer Organisation, einer Strafverfolgungsbehörde, einer Gesundheitsbehörde, einer staatlichen Regulierungsbehörde und einer Einzelperson.

7. System (100) nach einem beliebigen der vorhergehenden Ansprüche, wobei die elektronische Vorrichtung (102) einem Arbeitnehmer (202) zugeordnet ist und die Entität (208) ein Arbeitgeber ist.

8. System (100) nach Anspruch 7, wobei die Serveranordnung (104) dazu eingerichtet ist, Zugriffsrechte basierend auf einer vertraglichen Vereinbarung (210) zwischen dem Arbeitgeber (208) und dem Arbeitnehmer (202) zu bestimmen.

9. System (100) nach Anspruch 8, wobei die Serveranordnung (104) dazu eingerichtet ist, die Zugriffsrechte basierend auf der Zeit der von dem Arbeitnehmer erbrachten Dienstleistungen (202), dem Standort der Dienstleistungen des Arbeitnehmers und der Dauer der von dem Arbeitnehmer erbrachten Dienstleistungen, wie in der vertraglichen Vereinbarung (210) vereinbart, zu bestimmen.

10. System (100) nach Anspruch 8 und 9, wobei die Serveranordnung (104) dazu eingerichtet ist, die Zugriffsrechte basierend auf einem Zustand einer auf der elektronischen Vorrichtung (102) installierten Anwendung zu bestimmen, wobei der Zustand der Anwendung einer ist von: einem aktiven Zustand und einem inaktiven Zustand.

11. System (100) nach einem beliebigen der vorhergehenden Ansprüche, wobei die Serveranordnung (104) dazu eingerichtet ist, die Zugriffsrechte basierend auf Notfallbedingungen in einem geografischen Gebiet der elektronischen Vorrichtung (102) zu bestimmen, und wobei die Notfallbedingung eines oder mehrere ist von: einer Naturkatastrophe, einem Unfall, einem unbefugten Zugriff auf die elektronische Vorrichtung und der Anwesenheit der elektronischen Vorrichtung in einem eingeschränkten geografischen Gebiet.

12. System (100) nach Anspruch 1, wobei die Serveranordnung (104) dazu eingerichtet ist, den Gesundheitszustand der Person an die Entität zu übermitteln, wobei die Entität (208) wenigstens eines ist von: einer Gesundheitsorganisation, einem bezeichneten Gesundheitsspezialisten und Notfallkontakten der Person.

13. Verfahren (300) für ein sicheres Bereitstellen von Standortinformationen einer elektronischen Vorrichtung (102), wobei das Verfahren umfasst:
Erhalten von Standortinformationen und zugehörigen Berechtigungen, die sich auf die elektronische Vorrichtung beziehen, wobei die Standortinformationen durch die elektronische Vorrichtung verschlüsselt werden;
Bestimmen von Zugriffsrechten für die elektronische Vorrichtung basierend auf den von der elektronischen Vorrichtung bereitgestellten Berechtigungen, wobei die Zugriffsrechte eine oder mehrere Bedingungen für ein Teilen von Standortinformationen umfassen, wobei die Zugriffsrechte ferner basierend auf dem Gesundheitszustand einer mit der elektronischen Vorrichtung (102) verbundenen Person bestimmt werden;
Empfangen einer Anfrage von einer Entität (208) für ein Zugreifen auf die Standortinformationen der elektronischen Vorrichtung;
Bestimmen, ob die Entität basierend auf den bestimmten Zugriffsrechten, die der elektronischen Vorrichtung zugeordnet sind, für ein Zugreifen auf die Standortinformationen der elektronischen Vorrichtung berechtigt ist;
Entschlüsseln der Standortinformationen der elektronischen Vorrichtung, wenn die Entität berechtigt ist, auf die Standortinformationen zuzugreifen, wobei die Standortinformationen unter Verwendung eines Paares aus öffentlichem Schlüssel und privatem Schlüssel entschlüsselt werden; und Bereitstellen der entschlüsselten Standortinformationen an die Entität.

14. Computerprogrammprodukt mit darin gespeicherten maschinenlesbaren Anweisungen, die, bei Ausführung durch die Serveranordnung (104), die Serveranordnung veranlassen, ein Verfahren nach einem der Ansprüche 1 bis 12 durchzuführen.

## Revendications

1. Système (100) pour fournir de manière sécurisée des informations de localisation d'un dispositif électronique (102), le système comprenant un agencement de serveur couplé de manière communicative au dispositif électronique, dans lequel l'agencement de serveur (104) est configuré pour :
obtenir des informations de localisation et des autorisations associées concernant un dispositif électronique, les informations de localisation étant chiffrées par le dispositif électronique ;
la détermination de droits d'accès pour le dispositif électronique sur la base des permissions fournies par le dispositif électronique, dans lequel les droits d'accès comprennent une ou plusieurs conditions pour partager des informations de localisation, dans lequel l'agencement de serveur (104) est en outre configuré pour déterminer les droits d'accès sur la base de l'état de santé d'un individu associé au dispositif électronique (102) ;
recevoir une demande d'une entité (208) pour accéder aux informations de localisation du dispositif électronique ;
déterminer si l'entité est autorisée à accéder aux informations de localisation du dispositif électronique sur la base des droits d'accès déterminés associés au dispositif électronique ;
décrypter les informations de localisation du dispositif électronique si l'entité est autorisée à accéder aux informations de localisation sur la base des droits d'accès déterminés, dans lequel les informations de localisation sont décryptées en utilisant une paire de clés publique et privée ; et
fournir les informations de localisation déchiffrées à l'entité.

2. Système (100) selon la revendication 1, dans lequel l'agencement de serveur (104) est configuré pour refuser l'accès aux informations de localisation du dispositif électronique (102) si l'entité (208) n'est pas autorisée à accéder aux informations de localisation sur la base des droits d'accès déterminés.

3. Système (100) selon la revendication 1 ou 2, dans lequel le dispositif électronique (102) est configuré pour crypter les informations de localisation en utilisant une paire de clé publique et de clé privée.

4. Système (100) selon l'une quelconque des revendications précédentes, dans lequel l'agencement de serveur (104), le dispositif électronique (102) et l'entité (208) communiquent sur un réseau à chaîne de blocs.

5. Système (100) selon l'une quelconque des revendications précédentes, dans lequel le dispositif électronique (102) est l'un parmi : un dispositif d'utilisateur, un actif industriel, un dispositif IdO et un véhicule autonome.

6. Système (100) selon l'une quelconque des revendications précédentes, dans lequel l'entité (208) est l'un parmi : une organisation, une agence d'application de la loi, un service de santé, un organisme de réglementation gouvernemental et un individu.

7. Système (100) selon l'une quelconque des revendications précédentes, dans lequel le dispositif électronique (102) est associé à un employé (202) et l'entité (208) est un employeur.

8. Système (100) selon la revendication 7, dans lequel l'agencement de serveur (104) est configuré pour déterminer les droits d'accès sur la base d'un accord contractuel (210) entre l'employeur (208) et l'employé (202).

9. Système (100) selon la revendication 8, dans lequel l'agencement de serveur (104) est configuré pour déterminer les droits d'accès sur la base du temps des services fournis par l'employé (202), de l'emplacement des services de l'employé, et de la durée des services fournis par l'employé comme convenu dans l'accord contractuel (210).

10. Système (100) selon les revendications 8 et 9, dans lequel l'agencement de serveur (104) est configuré pour déterminer les droits d'accès sur la base d'un état d'une application installée dans le dispositif électronique (102), dans lequel l'état de l'application est l'un parmi : un état actif et un état inactif.

11. Système (100) selon l'une quelconque des revendications précédentes, dans lequel l'agencement de serveur (104) est configuré pour déterminer les droits d'accès sur la base de conditions d'urgence dans une zone géographique du dispositif électronique (102), et dans lequel la condition d'urgence est l'un ou plusieurs parmi : une catastrophe naturelle, un accident, un accès non autorisé du dispositif électronique, et la présence du dispositif électronique dans une zone géographique restreinte.

12. Système (100) selon la revendication 1, dans lequel l'agencement de serveur (104) est configuré pour fournir l'état de santé de l'individu à l'entité, dans lequel l'entité (208) est l'au moins un parmi : une organisation de santé, un spécialiste de santé désigné et des contacts d'urgence de l'individu.

13. Procédé (300) pour fournir de manière sécurisée des informations de localisation d'un dispositif électronique (102), dans lequel le procédé comprend :
l'obtention des informations de localisation et des autorisations associées concernant le dispositif électronique, les informations de localisation étant chiffrées par le dispositif électronique ;
la détermination de droits d'accès pour le dispositif électronique sur la base des permissions fournies par le dispositif électronique, dans lequel les droits d'accès comprennent une ou plusieurs conditions pour partager des informations de localisation, dans lequel les droits d'accès sont en outre déterminés sur la base de l'état de santé d'un individu associé au dispositif électronique (102) :;;
la réception d'une demande d'une entité (208) pour accéder aux informations de localisation du dispositif électronique ;
la détermination du fait que l'entité est autorisée à accéder aux informations de localisation du dispositif électronique sur la base des droits d'accès déterminés associés au dispositif électronique ;
le décryptage des informations de localisation du dispositif électronique si l'entité est autorisée à accéder aux informations de localisation, dans lequel les informations de localisation sont décryptées à l'aide d'une paire de clé publique et de clé privée ; et la fourniture des informations de localisation décryptées à l'entité.

14. Produit de programme informatique ayant des instructions lisibles par machine stockées dans celui-ci, qui, lorsqu'elles sont exécutées par l'agencement de serveur (104), amènent l'agencement de serveur à exécuter un procédé selon l'une quelconque des revendications 1 à 12.
